Europäisches Patentamt

European Patent Office

Office européen des brevets

(19)

(11) Numéro de publication: **0 000 850**
**B1**

(12) **FASCICULE DE BREVET EUROPEEN**

(21) Numéro de dépôt: **78400041.6**

(22) Date de dépôt: **28.06.78**

(51) Int. Cl.³: **F 16 H 25/18, F 16 K 31/16**

(54) Mécanisme multiplicateur d'effort et robinet à obturateur équipé d'un tel mécanisme

(30) Priorité: **11.07.77 FR 7721261**

(43) Date de publication de la demande:
**21.02.79 Bulletin 79/04**

(45) Mention de la délivrance du brevet:
**06.08.80 Bulletin 80/16**

(84) Etats contractants désignés:
**BE CH DE GB LU NL**

(56) Documents cités:
**CH - A - 279 424**
**CH - A - 574 063**
**FR - A - 425 233**
**FR - A - 1 391 990**
**FR - A - 2 231 899**

(73) Titulaire: **Pont-à-Mousson S.A.**
**91, Avenue de la Libération**
**F - 54700 Nancy (FR)**

(72) Inventeur: **Barbe, Pierre Louis Christian**
**3, Rue Ballan**
**F - 54200 Toul (FR)**

(74) Mandataire: **Lavoix, Jean**
**c/o Cabinet Lavoix 2, Place D'Estienne D'Orves**
**F - 75441 Paris Cedex 09 (FR)**

Courier Press, Leamington Spa, England.

Mécanisme multiplicateur d'effort et robinet à obturateur équipé d'un tel mécanisme

La présente invention est relative aux mécanismes multiplicateurs d'effort du type comprenant un organe menant mobile suivant un axe et présentant une surface menante faisant un angle relativement faible avec cet axe, une surface d'appui fixe faisant un angle relativement grand avec cet axe, un organe mené mobile suivant ledit axe et présentant une surface d'attaque perpendiculaire à cet axe, et des organes de roulement pouvant venir en contact simultanément avec ces trois surfaces.

De tels mécanismes sont particulièrement intéressants lorsqu'on recherche une poussée importante et un faible déplacement, par exemple pour provoquer un blocage ou un verrouilage d'un obturateur de robinet ou d'un outil de machine-outil.

Le principe des mécanismes de ce genre est connu: l'organe moteur ou menant est animé, sous l'action d'un effort modéré, d'une course relativement importante. Ce mouvement est transmis par l'intermédiaire des organes de roulement, qui prennent appui sur la surface d'appui fixe d'inclinaison plus forte, à l'organe mené, par action sur la surface d'attaque de celui-ci, chaque organe de roulement se trouvant ainsi emprisonné entre des trois surfaces considérées.

Dans les mécanismes connus de ce type, les organes de roulement sont constitués chacun par une bille, un galet, un rouleau ou un tonneau. Chacun de ces organes a ainsi trois contacts ponctuels ou linéaires, à raison d'un contact avec chacune de ces surfaces, mais c'est seulement sur la surface de l'organe menant qu'il y a roulement, les deux autres contacts étant de frottement. Il en résulte une perte d'énergie importante par frottement.

L'invention a pour but de fournir un mécanisme multiplicateur d'effort qui remédie à cet inconvénient en offrant dans les mêmes conditions que ci-dessus trois contacts de roulement au lieu d'un seul.

A cet effet, l'invention a pour objet un mécanisme du type précité, caractérisé en ce que chaque organe de roulement comporte trois éléments de roulement indépendants librement rotifs autour d'un même axe, chacun de ces éléments pouvant rouler sur une et une seule des trois surfaces.

Si de plus la surface d'appui est précédée, en considérant le sens actif de déplacement de l'organe menant, d'une surface parallèle à l'axe, la surface menante présentant un décrochement formant un angle important par rapport à cet axe, le mécanisme peut servir à transmettre tel quel un effort sur une distance quelconque et à ne multiplier cet effort qu'en fin de course.

Pour rendre le mécanisme à double effet multiplicateur d'effort, il peut être prévu un second ensemble multiplicateur comprenant une seconde surface menante, une seconde surface d'appui et une seconde surface d'attaque ainsi qu'un second jeu d'organes de roulement analogues aux premiers, ce second ensemble étant agencé de façon à multiplier l'effort dans le sens de déplacement de l'organe menant opposé au premier.

Le mécanisme multiplicateur d'effort suivant l'invention se prête particulièrement bein à l'actionnement d'un robinet pour canalisations industrielles de fluides nécessitant un effort élevé seulement pour le début d'ouverture de l'obturateur et pour la fin de fermeture, et une faible course correspondante. C'est pourquoi l'invention a également pour objet un robinet à obturateur coulissant et à servomoteur d'actionnement, caractérisé en ce qu'entre le servomoteur et la tige de manoeuvre de l'obturateur est interposé un mécanisme multiplicateur d'effort tel que défini ci-dessus.

Grâce à cet agencement, on peut par exemple remplacer un vérin d'actionnement à forte poussée, à membrane de grande surface, donc coûteux et de grand encombrement, qui aurait été nécessaire dans une commande classique, par un vérin beaucoup plus petit, dont la force de poussée est multiplée par le mécanisme de l'invention. Ceci permet d'utiliser un vérin disponible dans le commerce au lieu d'avoir à réaliser un vérin spécial de grandes dimensions, car les vérins habituellement disponibles dans le commerce sont de dimensions limitées. De plus, une telle application industrielle est particulièrement intéressante lorsque c'est l'air comprimé qui est utilisé comme fluide moteur pour le vérin, puisque dans la plupart des cas la pression de l'air disponible est limitée à quelques bars.

Les robinets industriels susceptibles de bénéficier de cette application sont par exemple les robinets-vannes à un ou deux opercules en forme de coin ou les robinets du type à soupape ou encore à obturateur en ogive et à siège évasé conjugué.

D'autres caractérisques et avantages de l'invention apparaîtront au cours de la description qui va suivre.

Aux dessins annexés, donnés uniquement à titre d'exemple:

la Fig. 1 est un schéma d'un mécanisme multiplicateur d'effort de type connu;

la Fig. 2 est un Schéma d'un mécanisme multiplicateur d'effort suivant l'invention;

la Fig. 2A est un schéma analogue à la Fig. 2 illustrant le fonctionnement de ce mécanisme;

la Fig. 3 est un diagramme représentant la course de la tige d'actionnement d'un robinet en fonction de l'effort exercé sur cette tige, pour un premier type de robinet;

la Fig. 4 est un diagramme analogue correspondant à un second type de robinet;

la Fig. 5 est une vue en perspective partiellement éclatée d'un mécanisme suivant l'invention;

la Fig. 6 est une vue schématique en coupe axiale d'un robinet à soupape équipé d'un mécanisme analogue à celui de la Fig. 5;

la Fig. 6A est une vue de détail illustrant le fonctionnement du mécanisme de la Fig. 6;

la Fig. 7 est une vue partielle de détail prise suivant la ligne 7—7 de la Fig. 6;

la Fig. 8 est une demi-vue schématique en coupe d'un mécanisme multiplicateur d'effort du type à simple effet, appliqué à l'actionnement d'une tige de manoeuvre de robinet, en phase d'approche;

la Fig. 9 est une vue analogue à la Fig. 8 du même mécanisme en début de verrouillage de fermeture;

la Fig. 10 est une vue du même mécanisme en position de verrouillage de la tige de manoeuvre;

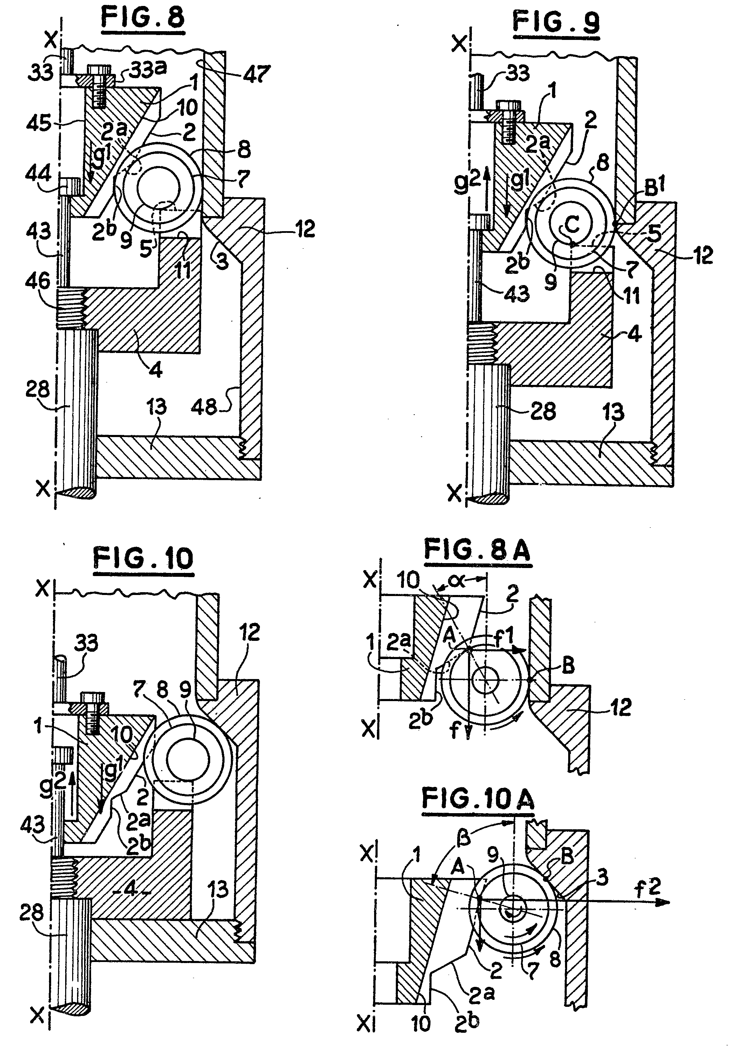

les Fig. 8A et 10A sont des vues partielles de détail des Fig. 8 et 10 respectivement;

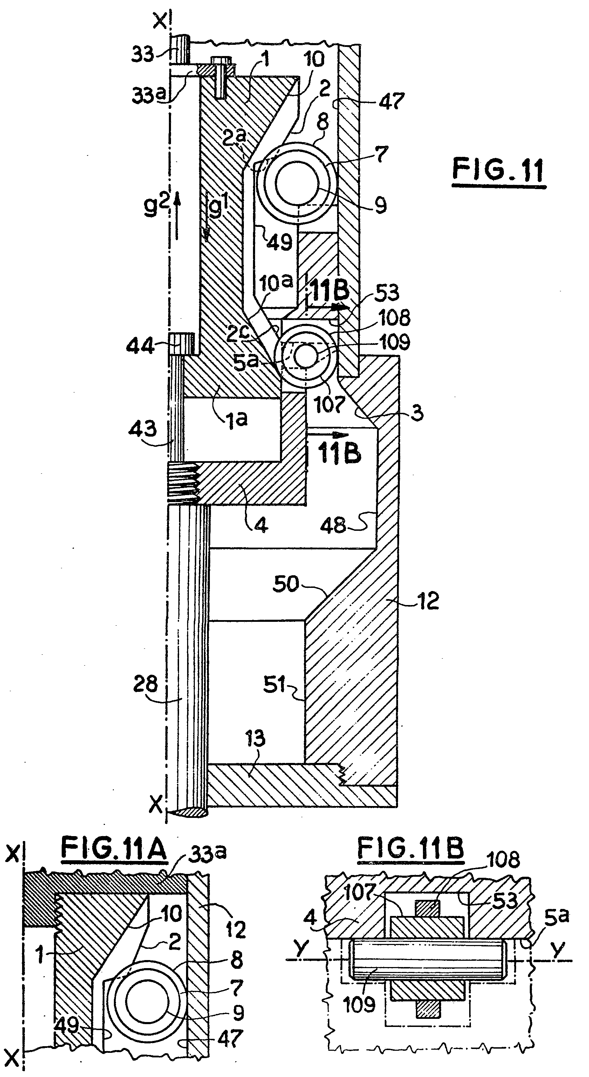

la Fig. 11 est une demi-vue schématique en coupe axiale d'un robinet à soupape équipé d'un mécanisme multiplicateur d'effort suivant l'invention du type à double effet, en position de course d'approche vers la fermeture;

la Fig. 11A est une vue partielle de détail d'une variante du robinet de la Fig. 11;

la Fig. 11B est une vue de détail prise en coupe suivant la ligne 11B—11B de la Fig. 11;

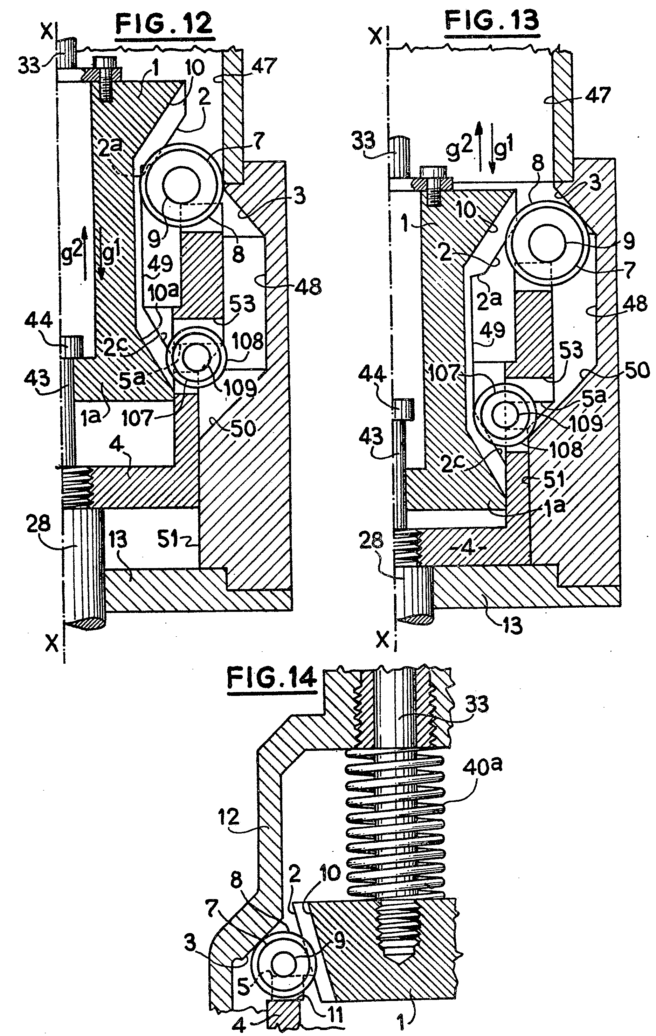

la Fig. 12 est une vue correspondant à la Fig. 11 du même mécanisme en début de verrouillage;

la Fig. 13 est une vue du même mécanisme en position de verrouillage en fermeture et en position de début de déverrouillage, en vue de l'ouverture;

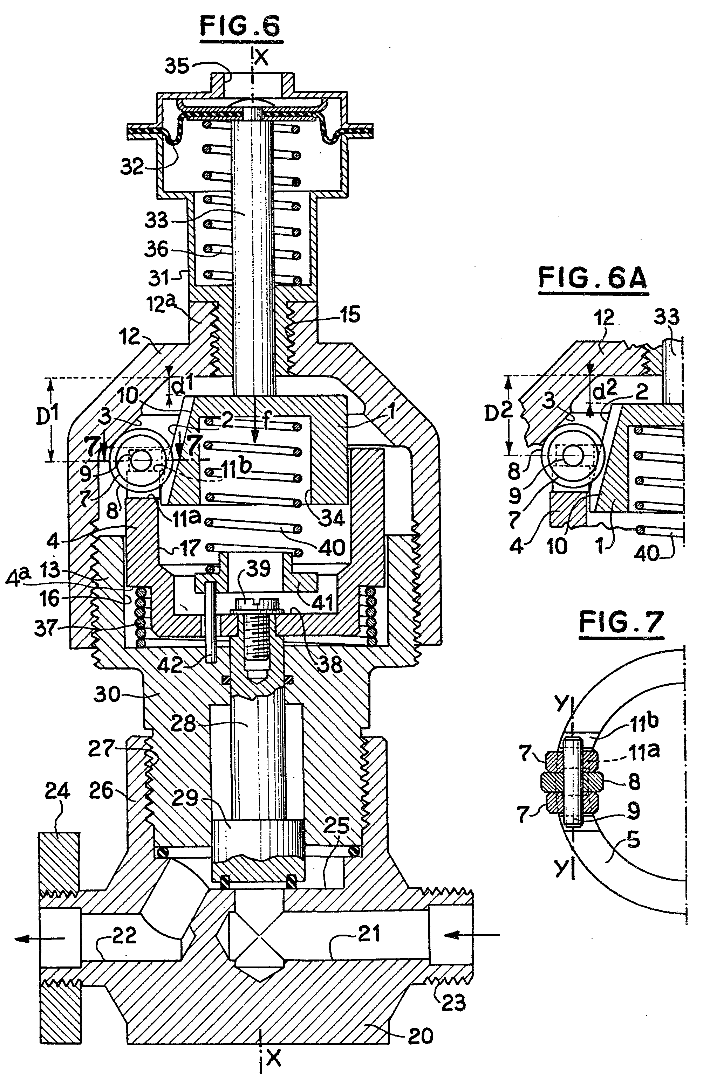

la Fig. 14 est une vue partielle en coupe d'une variante de réalisation du mécanisme de la Fig. 6.

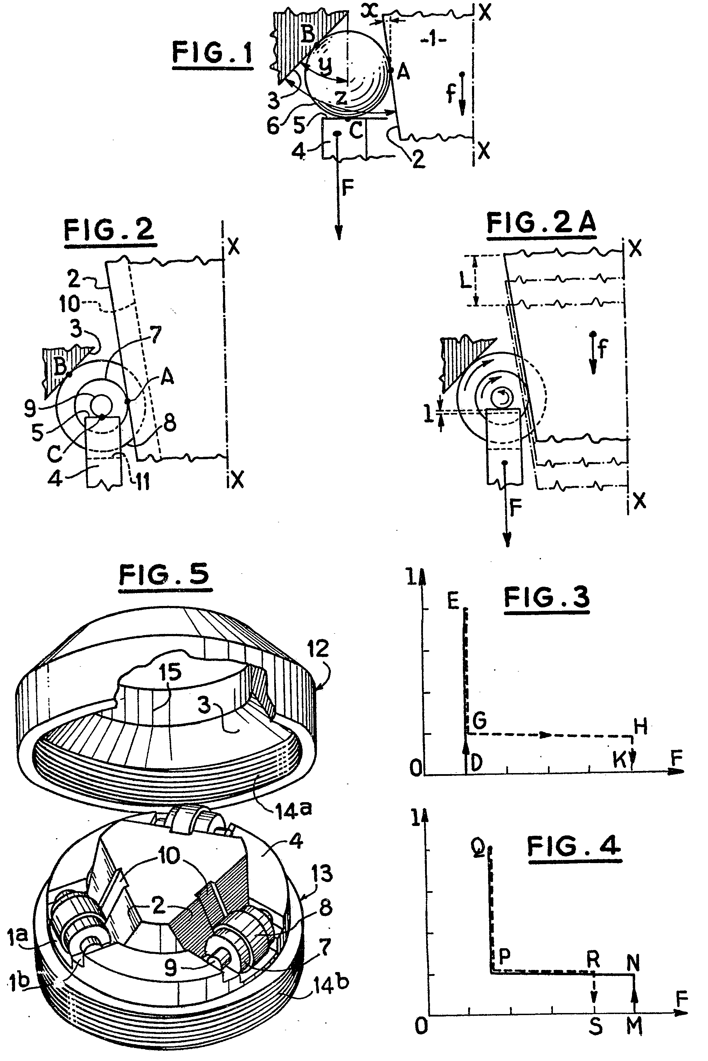

Suivant le schéma de la Fig. 1 qui représente en section méridienne un mécanisme multiplicateur d'effort connu, le principe d'un tel mécanisme est le suivant.

Un organe moteur ou menant 1, constitué par exemple par une pièce de révolution autour d'un axe X—X, comporte une rampe 2 de faible inclinaison d'angle $x$ par rapport à l'axe X—X. Cette rampe 2 peut être tronconique d'axe X—X ou bien être plane.

Un organe d'appui ou de réaction est constitué par une rampe fixe 3 tronconique d'axe X—X, d'angle d'inclinaison $y$ sensiblement supérieur à l'angle $x$ et convergente dans le sens opposé à la rampe 2 de façon à former avec celle-ci un coin ou angle creux $z$ à paroi mobile 2 parallèlement à l'axe X—X.

Un organe mené 4 présente une partie d'extrémité constituée par un manchon d'axe X—X présentant une surface d'attaque ou butée 5 perpendiculaire à l'axe X—X; cet organe 4 est mobile parallèlement à l'axe X—X. La surface 5 forme en section méridienne le troisième côté d'un triangle dont les deux autres côtés sont les rampes 2 et 3.

Des organes de transmission d'effort, disposés dans l'espace compris entre les rampes 2 et 3 et la surface 5, sont constitués par exemple par des billes 6 réparties autour de l'axe X—X. Les billes 6 ont des contacts tangentiels et ponctuels A, B, C respectivement avec la rampe 2, la rampe 3 et la surface d'attaque 5.

En section méridienne, chaque bille 6 forme pendant la phase active du mécanisme, un cercle inscrit dans le triangle 2—3—5.

En fonctionnement, on applique à l'organe menant 1 un effort moteur $f$ parallèle à l'axe X—X. L'organe 1 se déplace alors dans le même sens, et sa rampe 2 tend à repousser chaque bille 6 hors de la pointe d'angle $z$ du triangle 2—3—5. Ce déplacement provoque un refoulement de chaque bille 6, l'obligeant à rouler sur la rampe 2 et à se déplacer le long de la rampe fixe de réaction ou d'appui 3 qui lui imprime à son tour un certain déplacement parallèle à l'axe X—X. En raison de la différence entre les angles $x$ et $y$; le déplacement des billes 6 est sensiblement inférieur au déplacement d'origine de l'organe menant et, de façon correspondante, les billes transmettent à la surface 5 un effort F nettement supérieur à $f$. C'est la pente de la rampe 2 qui donne le rapport de multiplication d'effort F/$f$.

En raison de la loi de conservation de l'énergie, le travail $f$ X L se conserve en devenant F X $l$, si $l$ et L désignent les déplacements respectifs des organes 4 et 1 (Fig. 2A). Cependent alors que le contact A est de roulement, les contacts B et C sont de frottement. Il en résulte que, dans la pratique, l'énergie F X $l$, transmise à l'organe mené 4, est un peu inférieure à l'énergie $f$ X L fournie par l'organe menant à rampe 2, du fait des pertes par frottement. La longueur $l$ étant déterminée par la géométrie de l'ensemble, les pertes se reportent entièrement sur l'effort F transmis à l'organe mené.

Conformément à l'invention (Fig. 2 et 2A), chaque bille 6 est remplacée par un jeu de trois éléments de roulement 7—8—9 coaxiaux d'axe Y—Y perpendiculaire à X—X, de diamètres différents, montés fous et indépendants autour de cet axe Y—Y. Ce sont des galets ou rouleaux. Le galet 7, de diamètre moyen, roule sur la rampe 2 de l'organe menant. Le galet 8, de grand diamètre, roule sur la rampe d'appui ou de réaction 3 fixe. Le galet 9, de petit diamètre roule sur la surface d'attaque 5 de l'organe mené 4.

En raison de l'encombrement des galets 7 et 8, deux des surfaces de roulement sont échancrées pour les laisser tourner librement sans contact: ce sont la rampe 2, échancrée suivant une rainure 10, et la surface d'attaque 5, échancrée suivant une rainure 11. Les rampes 2 et 3 sont planes.

A cette différence près que les trois contacts A, B et C sont de roulement et sont linéaires, les points A, B et C étant les projections des génératrices de contact des pièces de roulement 7, 8 et 9, le fonctionnement est le même que précédemment: le jeu de galets 7, 8 et 9 de transmission transmet le travail f X L de l'organe menant à rampe 2 à l'organe mené de surface d'attaque 5 en transformant ce travail en F X / augmentant la poussée et diminuant la course. Pendant le déplacement, les trois galets tournent dans les sens indiqués par les flèches de la Fig. 2A.

On voit sur la Fig. 2A qu'une descente de la rampe de multiplication d'effort 2 dans le sens de la flèche f rétrécit l'intervalle angulaire entre les rampes 2 et 3 et force à descendre les organes de roulement. Réciproquement, une montée de la rampe 2 élargit l'intervalle angulaire précité et permet une montée des organes de roulement lorsqu'un effort de poussée est exercé vers le haut sur l'organe mené 4.

Un mécanisme multiplicateur d'effort suivant le principe de la Fig. 2 se prête particulièrement bien à l'actionnement de la tige de manoeuvre de l'obturateur d'un robinet industriel, par exemple de type à soupape ou à opercule(s), compte tenu du fait que les manoeuvres d'ouverture et de fermeture exigent des efforts importants avec des déplacements faibles, et que le déplacement de l'obturateur entre les deux positions extrêmes n'exige qu'un effort beaucoup plus faible.

En effet, suivant le diagramme de fonctionnement d'un robinet à soupape (Fig. 3) indiquant en abscisse la poussée F sur la tige de manoeuvre et en ordonnée la course / de la soupape, les manoeuvres d'ouverture (segment DE) et de fermeture (ligne brisée EGHK) s'effectuent ainsi:

—ouverture DE: faible traction F constante de la tige de manoeuvre pendant toute l'ouverture;

—fermeture EGHK: faible poussée F constante de la tige de manoeuvre pendant la plus grande partie de la course de la soupape dite course d'approche (EG), suivie d'une augmentation considérable de la force de poussée F pour une très faible course de la soupape vers son siège (GH) et parachevée par une application de la soupape sur son siège avec la même forte poussée F constante (HK), ce qui constitue la course de verrouillage.

Dans d'autres types de robinets tels que les robinets à un ou deux opercules, les manoeuvres s'effectuent comme représenté à la Fig. 4:

—ouverture (ligne brisée MNPQ): forte traction initiale F constante sur une faible course MN pour déverrouiller ou décoincer le ou les opercules, puis forte diminution de l'effort de traction sur la tige de manoeuvre sur une très faible course (NP) et dégagement complet des tubulures d'écoulement avec un faible effort de traction constant (PQ);

—fermeture (ligne brisée QPRS): en sens inverse, on observe une faible poussée constante sur la tige de manoeuvre avec une grande course d'approche vers la position de fermeture (QP), suivie d'une montée rapide de l'effort de poussée sur la tige de manoeuvre pour une très faible course (PR) et d'une course finale de verrouillage avec un effort de poussée constant (RS). Il est à noter que l'effort de verrouillage constant (RS) est inférieur à l'effort de déverrouillage (MN), constant également, en raison du coincement de l'obturateur sur son siège.

On comprend que, dans tous les cas, il soit très avantageux de faire intervenir un mécanisme multiplicateur d'effort soit à simple effet (Fig. 3) soit à double effet (Fig. 4). De tels mécanismes vont maintenant être décrits, en utilisant les références 1 à 5 et 7 à 11 pour désigner des éléments jouant le même rôle qu'à la Fig. 2.

Le mécanisme multiplicateur d'effort à simple effet de la Fig. 5 comporte un corps tubulaire d'axe X—X en deux parties 12 et 13 vissées l'une sur l'autre par des filetages femelle et mâle $14^a$—$14^b$. La partie 12 formant coiffe, représentée dévissée à la Fig. 5, comporte une ouverture cylindrique centrale 15 pour livrer passage à l'organe moteur ou menant, et une rampe d'appui ou de réaction 3 tronconique. Les détails de ce mécanisme sont visibles aux Fig. 6 et 7, qui montrent un robinet à soupape équipé d'un mécanisme analogue.

La partie 13 sert à loger les organes menant, mené et de transmission. Elle comporte à cet effet une cavité cylindrique borgne 16 ouverte vers le haut dans laquelle coulisse, par sa surface cylindrique extérieure, un manchon tubulaire 4 constituant l'organe mené. Ce manchon est évidé sur sa tranche supérieure par un nombre d'échancrures $11^a$—$11^b$ en escalier égal au nombre de jeux d'éléments de transmission 7—8—9, ici égal à trois. Les échancrures profondes $11^a$ reçoivent avec jeu les éléments de roulement et de transmission d'effort et de course 7 et 8 qui ne roulent pas sur les paliers latéraux $11^b$, qui constituent à la fois la surface d'attaque ou de butée 5 et des moyens de positionnement latéral des éléments 9 de plus petit diamètre.

La cavité cylindrique borgne 17 du manchon 4, ouverte vers le haut, sert de guidage à un organe menant cylindrique 1 tronqué en autant de rampes planes 2 qu'il y a de jeux d'organes de roulement, ici au nombre de trois. Chaque rampe 2 est échancrée par une rainure 10 droite et parallèle à la rampe 2.

Les trois éléments de transmission et de roulement 7—8—9 sont logés entre l'organe menant 1, le manchon mené 4 et la coiffe 12 du corps. En fait, pour des raisons de construction, chaque jeu d'éléments de roulement 7—8—9 est monté suivant un système pourvu d'une symétrie (Fig. 7), avec un galet cylindrique 8 de grand diamètre flanqué de deux galets 7 de diamètre inférieur. Les galets 7 et 8 tourillonnent librement, indépendamment les uns des autres, sur un rouleau 9 d'axe Y—Y, de diamètre beaucoup plus faible que les galets 7 et dont la longueur est sensiblement supérieure à la somme des longueurs des génératrices des galets 7 et 8, de manière à présenter ses extrémités actives de roulement en saillie par rapport aux galets 7. Le galet 8 est destiné à rouler sur la rampe d'appui fixe 3 de la partie 12 formant coiffe. L'échancrure 10 des rampes 2 a une longueur supérieure à celle du galet 8 et une profondeur supérieure à la différence des rayons entre le galet 8 et les galets 7 afin de livrer passage au galet 8 avec jeu, sans contact.

Les deux galets 7 de diamètre moyen roulent sur la rampe 2.

Le rouleau 9 roule par ses extrémités libres et actives sur les échancrures 11$^b$ du manchon tubulaire 4, qui offrent une surface active de largeur supérieure à la longueur active de chaque extrémité de rouleau 9. Les échancrures 11$^a$ du manchon 4 livrent passage avec jeu, sans contact, aux galets 7 et 8 et ont par conséquent une largeur supérieure à la somme des longueurs des génératrices d'un galet 8 et de deux galets 7 et une profondeur, par rapport aux échancrures 11$^b$, supérieure à la différence de rayon entre le galet 8 et le rouleau 9.

Les contacts de roulement des galets 7 et des rouleaux 9 ne sont pas ponctuels mais linéaires suivant des génératrices dont les traces, au schéma de la Fig. 2, sont les points A et C; de même, en raison de la faible longueur axiale des galets 8, il y a également contact linéaire en B. En variante, la rampe tronconique 3 peut être remplacée par trois rampes planes, ou bien le galet central 8 roulant sur cette rampe 3 peut être galbé en tonneau, cependant que les trois rampes 2 à méplat pourraient être remplacées par une rampe unique tronconique et que les galets 7 pourraient rester cylindriques ou bien être galbés en tonneaux.

Le robinet proprement dit de la Fig. 6 comporte un corps 20 d'axe X—X, des conduits d'écoulement de fluides dans le sens des flèches, 21 pour l'entrée et 22 pour la sortie, perpendiculaires à l'axe X—X; aux extrémités de ces conduits sont prévus des moyens de raccordement avec des canalisations par filetage 23 et par bride 24. Le corps 20 comprend également un siège plan 25 d'axe X—X et un pot supérieur 26 cylindrique à filetage intérieur 27. Dans ce pot supérieur 26 est vissé un prolongement tubulaire inférieur 30 de la partie 13 du mécanisme multiplicateur. Dans ce prolongement 30, formant chapeau du robinet, coulisse à joint étanche la tige de manoeuvre 28 de la soupape 29 du robinet.

La partie 12 du corps de multiplicateur, formant coiffe d'axe X—X, est surmontée d'un bossage 12$^a$ de raccordement par filetage avec le corps 31 d'un vérin à membrane constituant un servomoteur. La membrane 32 d'axe X—X est solidaire d'une tige-poussoir 33 d'axe X—X guidée à travers un alésage du bossage 12$^a$ et susceptible d'exercer une poussée sur la tranche d'extrémité supérieure de l'organe menant 1 du mécanisme multiplicateur d'effort. Ce dernier se présente en fait sous la forme d'une capsule creuse à cavité 34 orientée vers le bas.

Le corps 31 comporte à sa partie supérieure une ouverture 35 susceptible d'être raccordée à une alimentation en fluide moteur sous pression, par exemple de l'air comprimé. La membrane 32 est soumise sur sa face supérieure à la pression du fluide moteur et, sur sa face inférieure, à l'action antagoniste d'un ressort de rappel 36 prenant appui sur le fond inférieur du corps 31.

Le manchon mené 4 coulisse dans la cavité 16 à l'encontre d'un ressort hélicoïdal 37 prenant appui sur le fond inférieur de cette cavité et sur un épaulement extérieur 4$^a$ du manchon 4. Le fond 38 de ce manchon 4 est fixé à la tige de manoeuvre 28 qui le traverse, par exemple par une vis 39. Ainsi le manchon 4 est-il solidaire en translation de la tige de manoeuvre 28 du robinet.

A l'intérieur du manchon 4, l'organe menant 1 peut coulisser dans la cavité 17 sous les actions antagonistes de la tige-poussoir 33, donc du vérin à membrane 32, et d'un ressort 40 hélicoïdal de rappel comprimé entre le fond supérieur de la cavité 34 et une bague intermédiaire fixe 41 fixée au chapeau 30 du robinet par au moins une goupille 42 qui traverse avec jeu le fond de cuvette 38 du manchon 4.

Fonctionnement:

Lorsque le vérin à membrane 32 est inactif, c'est-à-dire non alimenté par le conduit 35 en fluide sous pression, la soupape 29 est appliquée sur son siège 25 en position de fermeture, sous l'action du ressort de rappel 40. En effet, le ressort 40 fait monter l'organe 1, de sorte que l'intervalle angulaire entre les rampes 2 et 3 tend à se rétrécir, ce qui provoque le refoulement vers le bas organes de roulement 7—8—9, dont la descente du manchon 4 et de l'équipage de soupape 28—29 qui en est solidaire.

Lorsque le vérin à membrane 32 est alimenté en fluide sous pression par la conduite 35, une poussée $f$, exercée par ce vérin, est transmise par la tige 33 à la capsule menante 1, qui descend sur une course L. La capsule 1 comprime le ressort 40; par son déplacement vers le bas, elle élargit l'intervalle angulaire entre les rampes 2 et 3, ce qui permet la montée des organes de roulement 7—8—9 sous la poussée du manchon 4 et du ressort de rappel 37. Ceci provoque la montée du manchon 4 et de la tige 28, et donc l'ouverture de la soupape 29. Le travail moteur $f \times L$ se transforme, par les rampes 2 et 3 et la surface d'attaque 5, en un travail $F \times l$ à poussée F plus forte que la poussée $f$ et à course $l$ plus faible que la course L. Il y a donc multiplication d'effort, au moins tant que c'est sur la rampe 2 que roulent les galets 6.

Etant donné que les trois contacts sont exempts de frottement, le travail F X $l$ est pratiquement égal à $f$ X L, de sorte que le rapport F/f de multiplication d'effort est pratiquement le rapport théorique correspondant à la géométrie de l'ensemble.

Inversement, lorsque la pression sur la membrane 32 est relâchée, le ressort 36 fait remonter cette membrane 32, et le ressort de rappel 40, prenant appui sur la bague intermédiaire fixe 41, fait remonter la capsule 1, rétrécissant ainsi l'intervalle angulaire entre les rampes 2 et 3, ce qui refoule les organes de roulement 7—8—9 vers le bas en obligeant le manchon 4 à descendre par le jeu des rampes 2, 3 et 5; par conséquent, la soupape 29 se ferme sur le siège 25.

Ce fonctionnement est illustré par les Fig. 6 et 6A: à la Fig. 6, lorsque la distance $d^1$ entre la capsule 1 et le fond supérieur de la coiffe 12 est la plus faible (vérin au repos), la distance $D^1$ entre l'axe Y—Y des organes de roulements 7—8—9 et ce fond est la plus grande. Par voie de conséquence, le manchon 4 et par suite la soupape 29 sont en position basse (fermeture). A la Fig. 6A, lorsque la distance $d^2$ entre la capsule 1 et le fond supérieur de la coiffe 12 est plus grande (vérin soumis à la pression du fluide amené par la conduite 35), la distance $D^2$ entre l'axe Y—Y des organes de roulement et ce fond est plus faible que $D^1$, ce qui correspond à une position plus haute du manchon 4 et par conséquent de la soupape 29 (position d'ouverture). On voit aussi que la différence L= $d^2$—$d^1$ est très supérieure à la différence $l$ = $D^1$—$D^2$.

Suivant la variante d'exécution des Fig. 8 à 10, au lieu que les rampes 2 soient convergentes comme à la Fig. 6 vers le vérin d'actionnement et divergentes vers l'obturateur 29 et son siège 25, c'est le contraire qui est réalisé: la ou les rampes 2 sont convergentes vers l'obturateur et son siège.

Cette variante utilise, comme celle de la Fig. 6, un mécanisme dit à simple effet de multiplication car il n'offre un certain rapport ou facteur de multiplication de l'effort moteur que lors de la course de verrouillage, et se contente d'une transmission directe de l'effort moteur, sans multiplication, lors de la course de retour, c'est-à-dire de déverrouillage et d'ouverture. Ce mécanisme est réalisé de la manière suivante.

—Organe menant 1:

Cet organe est constitué par un cône à rampe inclinée 2 qui coulisse sur une broche axiale de guidage 43 á tête 44 traversant un alésage étagé 45 de ce cône. Cette broche est solidaire de la tige de manoeuvre du robinet 29 par l'intermédiare d'une portion de tige filetée 46 vissée dans l'extrémité supérieure de la tige de manoeuvre 28 de façon que la broche 43 et cette tige 28 soient solidarisées du manchon 4. Ce dernier présente une surface d'attaque 5 dans laquelle sont ménagés trois encoches 11.

Le cône 1 est actionné par une tige-poussoir 33 légèrement modifiée par rapport à celle de la Fig. 6 puisqu'elle comporte une bride $33^a$ de fixation au cône 1, ou tout autre moyen de fixation équivalent.

La rampe 2, dont la pente définit le rapport ou facteur de multiplication d'effort F/f, présente une particularité qui n'existe pas sur la Fig. 6: elle comporte une portion de dégagement $2^a$ fortement inclinée par rapport à l'axe X—X, suivie vers le bas par une portion en palier $2^b$ à peu près parallèle à l'axe X—X. La portion $2^a$ élargit brusquement l'intervalle angulaire entre le cône 1 et une cavité cylindrique de roulement 47 prolongeant vers le haut la rampe d'appui 3 de la coiffe 12 du mécanisme multiplicateur d'effort. Le dégagement $2^a$ facilite la pénétration des organes de roulement dans la cavité 47 lors de la course de recul de l'organe menant 1 et limite l'effort du galet 8 sur cette cavité cylindrique au point de contact B car cet effort, sans la portion de dégagement $2^a$, serait inutilement important et provoquerait une usure excessive de la cavité 47.

Il est à noter que le dégagement $2^a$—$2^b$ et la cavité cylindrique 47 sont inutiles dans le cas de la Fig. 6, où la course de recul de l'organe menant 1 est très faible.

—Organe d'appui et de réaction:

On reconnait la coiffe 12 du corps du mécanisme et la partie 13 de ce córps formant chapeau du robinet. La coiffe 12 comporte intérieurement une cavité de guidage de roulement pour les organes de transmission 7—8—9, qui se décompose, de haut en bas, en une partie cylindrique 47, mentionnée ci-dessus, une partie évasée à rampe droite plane ou tronconique 3, et une partie cylindrique 48 de diamètre supérieur à la partie 47.

—Organes de transmission:

Comme précédemment, les galets 7 et 8 et le rouleau 9 sont représentés ici en un seul exemplaire, mais figurent en plusieurs jeux répartis autour de l'axe X—X de symétrie du mécanisme. Ils sont destinés à rouler à l'intérieur de l'espace limité par les rampes 2—$2^a$—$2^b$, la surface d'attaque 5 et la cavité de roulement 47—3—48.

Fonctionnement:

a) *course d'approche (Fig. 8 et 8A):* le cône 1 reçoit la poussée du servomoteur (non représenté) par la tige-poussoir 33 et la transmet (flèche $g^1$) à l'organe 4 par l'intermédiaire des galets 7 et du rouleau 9, cependant que le galet 8 roule sur la cavité de guidage 47. Bien entendu, les galets 7 et le rouleau 9 roulent également sur leurs surfaces respectives de roulement. Il n'y a pas de multiplication d'effort, mais simple transmission de l'effort exercé par la tige 33, car les galets 8 restent appliqués sur la portion $2^a$ de la rampe 2, qui transmet axialement l'effort du cône 1 au manchon 4 par la surface d'attaque 5, et par suite à la tige 28 de l'obturateur. Pendant cette phase, seul le galet 8 tourne. Le diagramme des forces de la Fig. 8A montre que plus l'angle $\alpha$ que la normale à la portion $2^a$ fait avec l'axe X—X est petit, plus la réaction radiale $f^1 = f \, \text{tg}\alpha$ est petite, ce qui diminue l'usure et la déformation du cylindre 47.

b) *verrouillage (Fig. 9 et 10):* le début du verrouillage a lieu lorsque le galet 8 arrive au droit du point $B^1$ d'origine de la rampe d'appui 3 et de raccordement de celle-ci avec la cavité cylindrique 47. A partir du point $B^1$ et tant que le galet 8 roule sur la rampe 3, il y a multiplication d'effort, car les galets 7 dépassent la portion de dégagement $2^a$ et s'engagent sur la rampe de multiplication 2 située au-dessus de celle-ci. En effet, le diagramme des efforts de la Fig. 10A montre qu'à partir du point $B^1$ l'angle $\beta$ défini comme l'angle $\alpha$ de la Fig. 8A est beaucoup plus grand que cet angle $\alpha$. L'effort radial $f^2$: $f\text{tg}\,\beta$ subi par la rampe 3 est donc très supérieur à celui subi précédemment par la paroi cylindrique 47 la réaction de la rampe 3 parallèle à l'axe X—X s'en trouve augmentée et produit la multiplication de l'effort $f$ suivant cette direction.

Le verrouillage (Fig. 10) se termine lorsque l'organe mené 4 entre en contact avec le fond de la cavité 16, constitué par la partie 13 du corps de robinet. Pendant toute la phase de verrouillage, les galets 7 et 8 et le rouleau 9 ne cessent de rouler, comme cela est expliqué plus haut; l'angle $\beta$ étant constant, l'effort $f^2$ sur la rampe 3 reste constant, ainsi que par conséquent le facteur de multiplication. La fin de course de verrouillage a lieu avec les galets 7 situés vers l'extrémité de la rampe 2 la plus éloignée de l'axe X—X et le galet 8 sur la rampe 3.

c) *recul*: pendant la phase de verrouillage, le cône 1 a coulissé sur la broche 43, s'éloignant ainsi de la tête 44 de cette broche.

En début de phase de recul à partir de la position de la Fig. 10, la tige 33 exerce une traction vers le haut sur le cône 1 (sens de la flèche $g^2$), élargissant ainsi, l'intervalle angulaire entre les rampes 2 et 3 et n'exerçant aucun effort sur les organes de roulement. Il en résulte que le cône 1 revient rapidement en contact avec la tête 44 en coulissant sur la broche 43 sans que les organes 7—8—9 de roulement ne bougent. Puis, pour-suivant son recul, le cône 1 entraîne directement la tête 44 et la tige de manoeuvre 28 qui en est solidaire. Les organes de roulement 8 et 9 se contentent de rouler sur leurs de surfaces de roulement respectives 47 et 5 sans jouer aucun rôle actif. Il y a simple transmission d'effort sans multiplication. Les galets 7 sont dégagés de la rampe 2 et, lorsque le galet 8 arrive in $B^1$, les galets 7 se logent dans la portion de dégagement $2^a$. On retrouve la configuration de la Fig. 9, puis celle de la Fig. 8.

Les Fig. 11 à 13 montrent une variante de mécanisme multiplicateur suivant l'invention qui est dite à double effet de multiplication parce qu'elle offre un certain rapport ou facteur de multiplication aussi bien lors de la course de verrouillage que lors de la course de déverrouillage.

Ce mécanisme est en partie analogue au mécanisme précédent des Fig. 8 à 10, mais il a une plus grande longueur mesurée parallèlement à l'axe X—X, car il comporte en deux exemplaires un certain nombre de pièces analogues. Ce mécanisme est réalisé de la manière suivante.

—organe menant:

Comme précédemment, cet organe est monté coulissant sur la tige 43 a tête 44 d'axe X—X, mais le cône creux 1 est doublé par un cône similaire $1^a$ à rampe $2^c$ de pente inverse de celle de la rampe 2 et à rainures $10^a$. Les cônes 1 et $1^a$, qui sont réunis par une partie cylindrique 49, sont de même axe X—X et ne forment qu'un ensemble solidairement coulissant sur la tige 43 et actionné par la tige-poussoir 33, dont il est solidaire. Ils peuvent être solidaires également d'un piston vissé 33 coulissant dans la cavité cylindrique 47, qui forme alors cylindre de vérin moteur (Fig. 11a).

—organe d'appui et de réaction:

On reconnaît la coiffe 12 du mécanisme multiplicateur et la partie 13 formant chapeau de robinet. La partie 12 est plus longue que précédemment et comporte intérieurement, successivement de haut en bas, les parties suivantes; une cavité cylindrique 47; une partie évasée à rampe droite ou tronconique 3; à nouveau une cavité cylindrique 48 de diamètre supérieur à la partie 47; une partie de resserrement 50 à rampe droite ou tronconique de pente inverse de celle de la partie 3; et une cavité cylindrique 51.

—Organes de transmission:

En plus des jeux précédents d'éléments 7—8—9, on trouve d'autres jeux analogues d'éléments 107—108—109. Les éléments 7—8—9 sont destinés à rouler à l'intérieur de l'espace limité par les rampes 2—$2^a$—$2^b$, la surface d'attaque 5 de l'organe menant 4 et la cavité de roulement 47—3—48.

Les éléments 107—108—109 sont destinés à rouler à l'intérieur de l'espace limité par les rampes 49—$2^c$, une autre surface d'attaque $5^a$ de l'organe mené 4 et la cavité 47—3—48—50.

—Organe mené 4:

Il est constitué par un poussoir qui diffère du manchon 4 de la Fig. 8 par une plus grande longueur. A peu près à mi-hauteur de ce poussoir sont ménagées des ouvertures étagées 53 (Fig. 11B) réparties uniformément autour de l'axe X—X en nombre égal aux évidements d'extrémités 11 et servant chacun de logement a une jeu d'éléments 107—108—109. La surface d'appui active du rouleau 109 est la face supérieure $5^a$ des extrémités de l'ouverture 53, et les galets 107 et 108 peuvent rouler librement à l'intérieur de cette ouverturé.

Comme on le voit à la Fig. 11B, les éléments 107 et 108, au lieu d'être constitués par des galets, sont constitúes par des bagues enfilées l'une sur l'autre et sur le rouleau 109.

Fonctionnement:

a) *course d'approche (Fig. 9):* le double cône 1—1ª reçoit la poussée du servo-moteur (sens de la flèche $g^1$) par l'intermédiaire de la tige-poussoir 33 et la transmet axialement au poussoir 4 par l'intermédiaire de la portion de rampe 2ª et des galets 7, 8 et 9. Tout se passe comme à la Fig. 8, les organes 107—108—109 ne jouant aucun rôle. Il n'y a pas multiplication d'effort mais transmission directe de l'effort moteur suivant l'axe X—X.

b) *début de verrouillage (Fig. 12):* pour suivant le roulement, le galet 8 aborde la rampe 3, et les galets 7 s'engagent sur la rampe 2 de multiplication d'effort. Le fonctionnnement est le même que pour le mécanisme à simple effet des Fig. 9 et 10, les éléments 107—108—109 étant encore inactifs.

c) *verrouillage (Fig. 13):* le fonctionnement est encore le même que celui du mécanisme à simple effet. Au cours du mouvement de verrouillage, le double cône 1—1ª pénètre à l'intérieur de la partie cylindrique du poussoir 4 située sous les évidements 53 en s'éloignant de la tête 44 de la broche 43. En même temps, les galets 108 abordent la rampe 50 et se rapprochent de l'axe X—X, les galets 107 roulant sur la rampe 2ᶜ. Le rouleau 109 se trouve alors en contact de butée avec la surface d'attaque supérieure 5ª de l'ouverture 53.

Jusqu'ici les organes de roulement 107—108—109 n'ont joué aucun rôle actif, mais ils sont arrivés dans une position où ils sont prêts à intervenir.

d) *déverrouillage (Fig. 13):* une traction est exercée sur le cône double 1—1ª par la tige 33 ou par le piston 33ª (sens de la flèche $g^2$). La multiplication de l'effort de traction fourni par le servo-moteur est donnée par le roulement des galets 107 sur la rampe 2ᶜ avec l'appui du galet 108 sur la rampe d'appui ou de réaction 50, ce qui permet au rouleau 109 d'exercer une poussée sur la surface d'attaque 5ª du poussoir 4 et de tirer ce poussoir vers le haut en entraînant ainsi un recul de la tige de manoeuvre 28 de l'obturateur, qui en est solidaire. Pendant ce déverrouillage, les éléments 7—8—9 sont inactifs.

e) *recul (Fig. 12):* au cours de ce déverrouillage, le cône double 1—1ª, qui s'était éloigné de la tête 44 en coulissant sur la broche 43 au cours de la phase de verrouillage, se rapproche de cette tête 44. Dès qu'il n'y a plus de résistance au déverrouillage, les éléments 107—108—109 s'écartent librement de l'axe X—X, profitant de l'élargissement de la rampe 50. Le cône double 1—1ª coulisse sur la tige 43 jusq'à buter sur la tête 44. Puis, sous l'action de l'effort de traction exercé sur le cône double 1—1ª par la tige 33 ou le piston 33ª (sens de la flèche $g^2$), ce cône double, en butée contre la tête 44 et donc solidarisé à nouveau en translation avec la tige 28, reprend sa position de la Fig. 11 en entraînant directement la tige de manoeuvre 28 par la tête 44, ce qui permet une ouverture de l'obturateur sans multiplication d'effort. Pendant ce recul, aucun élément roulant 7—8—9 n'est actif.

Le dimensionnement est choisi de façon que même si les éléments 107—108—109 sortent des ouvertures 53, ils restent positionnés par rapport à elles et y retournent d'eux-mêmes.

Dans les modes de réalisation des Fig. 8 à 13, grâce à la portion 2ª d'entraînement axial direct sans multiplication, la course d'approche de l'obturateur vers la position de fermeture peut être aussi grande que possible et ne dépend que de la longueur de la cavité cylindrique 47.

Par ailleurs, alors que le mécanisme à simple effet n'assure pas de multiplication d'effort au déverrouillage, le mécanisme à double effet en assure une. Le mécanisme à simple effet des Fig. 8 à 10 est donc applicable aux robinets à soupape classiques à sens d'écoulement de fluide bien défini et de petit diamètre, tandis que le mécanisme à double effet des Fig. 11 à 13 est utile pour les robinets-vannes' à opercule simple ou à deux opercules susceptibles de se coincer, ainsi que pour les robinets à ogive et à siège conjugué évasé et pour les robinets à soupape où le sens d'écoulement du fluide n'est pas défini et dont la soupape peut de ce fait être soumise à une pression de fermeture importante, nécessitant alors un effort importante de soulèvement.

On remarque encore que le manchon 1 de la Fig. 6 a des rampes d'inclinaison inverse de cèlle du cône 1 des Fig. 8 à 13. Il en résulte que les mouvements des organes menants pour provoquer l'ouverture et la fermeture de la soupape sont inverses: c'est la montée du manchon 1 de la Fig. 6 mais la descente du cône 1 des Fig. 8 à 13 qui provoque la fermeture. On choisira le sens de l'inclinaison des rampes 2 en fonction des nécessités de la construction; il est à noter que ce choix n'est pas possible avec les mécanismes à billes ou analogues de la technique antérieure et est rendu possible par la faculté des galets 7 et 8 de tourner en sens opposés.

Une variante du robinet de la Fig. 6 est représentée à la Fig. 14. Le cône moteur 1 à rampes 2 a sa conicité convergente vers la soupape (non représentée) et divergente vers le servomoteur. Cette conicité est donc inverse de celle du manchon 1 de la Fig. 6. Un resort 40ª de rappel en position de fermeture est comprimé entre le cône 1 et la voûte supérieure de la coiffe 12. Il est à noter d'ailleurs que si, dans cet exemple comme dans celui de la Fig. 6, c'est le ressort 40 ou 40ª qui assure le

rappel en position de fermeture, c'est pour des raisons de sécurité, le robinet étant supposé devoir rester normalement fermé tant que le servomoteur ne reçoit pas un fluide sous pression. On peut évidemment imaginer un montage inverse du ressort assurant le maintien du robinet en position ouverte, le servomoteur provoquant la fermeture du robinet lorsqu'il est alimenté sous pression.

Exemple numérique:

Dans un robinet du type de la Fig. 6 équipé d'un multiplicateur d'effort suivant l'invention, pour un effort de 125 kg en vue d'appliquer la soupape 29 sur le siège 25, il suffit d'un ressort 40 ayant une poussée de 15 kg et une grande flexibilité. Il suffit d'un vérin à membrane du commerce d'une surface efficace de 8 cm², alors que dans un robinet démuni d'un multiplicateur d'effort, il faut un vérin à membrane d'une surface efficace de 35 cm². Le multiplicateur d'effort de l'invention permet donc de réduire sensiblement l'encombrement et le coût du vérin à membrane et d'alléger considérablement la poussée du ressort.

En variante, la rampe de multiplication d'effort 2 peut comporter successivement deux pentes, l'une d'approche avec une certaine multiplication, l'autre de verrouillage avec une multiplication encore plus forte. La première pente pourrait par exemple donner un facteur de multiplication de 5 et la seconde un facteur de multiplication de 10 à 12. Cette dernière serait du côte de l'extrémité la plus éloignée de l'axe de déplacement de la rampe. La rampe 2 peut être également à pente variable de manière continue, comme une came.

Le multiplicateur de l'invention est utilisable non seulement pour l'actionnement de robinets, mais encore pour le blocage ou le bridage de pièces à usiner sur des machines-outils, la soupape 29 devenant l'outil de blocage ou de bridage.

L'invention est encore applicable à l'actionnement de poinçons de marquage ou de découpage, la soupape 29 devenant un outil à découper.

L'invention est encore applicable aux embrayages, la tige de manoeuvre 28 étant alors solidaire d'un disque ou d'un cône d'embrayage.

Ces différentes applications industrielles ont comme point commun la nécessité d'appliquer un effort plus important en position finale de l'organe actionné qu'au cours du déplacement de cet organe pour gagner cette position, ou encore la nécessité d'appliquer un effort plus important pour détacher un organe actionné d'une certaine position privilégiée, l'éloignement de cette position privilégiée se faisant ensuite avec un effort moins important.

**Revendications**

1. Mécanisme multiplicateur d'effort, du type comprenant un organe menant mobile suivant un axe et présentant une surface menante faisant un angle relativement faible avec cet axe, une surface d'appui fixe faisant un angle relativement grand avec cet axe, un organe mené mobile suivant ledit axe et présentant une surface d'attaque perpendiculaire à cet axe, et des organes de roulement pouvant venir en contact simultanément avec ces trois surfaces, caractérisé en ce que chaque organe de roulement comporte trois éléments de roulement (7—8—9, 107—108—109) indépendants librement rotatifs autour d'un même axe (Y—Y), chacun de ces éléments pouvant rouler sur une et une seule des trois surfaces (2—3—5, 2$^c$—50—5$^a$).

2. Mécanisme suivant la revendication 1, caractérisé en ce que les surfaces menante (2) et d'appui (3) divergent toutes deux vers la surface d'attaque (5).

3. Mécanisme suivant le revendication 1, caractérisé en ce que les surfaces menante (2) et d'appui (3) divergent et convergent respectivement vers la surface d'attaque (5,5$^a$).

4. Mécanisme suivant la revendication 2, caractérisé en ce que la surface d'appui (3) est précédée, en considérant le sens actif (g$^1$) de déplacement de l'organe menant, d'une surface (47) parallèle à l'axe (X—X), la surface menante (2) présentant un décrochement (2$^a$—2$^b$) formant un angle important par rapport à cet axe.

5. Mécanisme suivant l'une quelconque des revendications 1 à 4, caractérisé en ce que l'organe menant (1) est monté coulissant le long d'une tige (43) à tête (44) solidaire de l'organe mené (4) et se solidarise de cette tête pendant sa course de retour (g$^2$).

6. Mécanisme suivant l'une quelconque des revendications 1 à 5, caractérisé en ce qu'il comporte un second ensemble multiplicateur comprenant une seconde surface menante (2$^c$), une seconde surface d'appui (50) et une seconde surface d'attaque (5$^a$), ainsi qu'un second jeu d'organes de roulement (107—108—109) analogues aux premiers (7—8—9), ce second ensemble étant agencé de façon à multiplier l'effort dans le sens de déplacement (g$^2$) de l'organe menant opposé au premier (g$^1$).

7. Mécanisme suivant l'une quelconque des revendications 1 à 6, caractérisé en ce que les trois éléments (7—8—9, 107—108—109) ont des diamètres différents, les surfaces menante (2) et d'attaque (5) présentant des évidements (10—11$^a$—11$^b$, 10$^a$—53) recevant avec jeu les éléments (7—8, 107—108) de plus grand diamètre que celui (7—9, 107—109) avec lequel elles coopèrent respectivement.

8. Robinet à obturateur coulissant et à servomoteur d'actionnement, caractérisé en ce qu'entre le servomoteur (31—32) et la tige de manoeuvre (28) de l'obturateur (29) est interposé un mécanisme suivant l'une quelconque des revendications 1 à 7.

## Patentansprüche

1. Kraftvervielfachervorrichtung, mit einem führenden Element, welches längs einer Achse beweglich ist und eine führende Fläche aufweist, die mit der Achse einen vergleichsweise kleinen Winkel einschließt, einer mit dieser Achse einen vergleichsweise großen Winkel einschließenden feststehenden Anlagefläche, einem geführten Element, welches längs der Achse beweglich ist und eine zur Achse senkrechte Angriffsfläche auffweist, und mit Rollkörpern, welche an allen drei Flächen gleichzeitig zur Anlage kommen können, dadurch gekennzeichnet, daß jeder Rollkörper drei Rollelemente (7—8—9, 107—108—109) aufweist, die unabhängig voneinander um die gleiche Achse (Y—Y) frei drehbar sind, und daß jedes der Elemente auf einer und nur einer der drei Flächen (2—3—5, 2$^c$—50—5$^a$) abrollen kann.

2. Vorrichtung nach Anspruch 1, dadurch gekennzeichnet, daß die führende Fläche (2) und die Anlagefläche (3) beide in Richtung auf die Angriffsfläche (5) divergieren.

3. Vorrichtung nach Anspruch 1, dadurch gekennzeichnet, daß die führende Fläche (2) und die Anlagefläche (3) in Richtung auf die Angriffsfläche (5,5$^a$) divergieren bzw. konvergieren.

4. Vorrichtung nach Anspruch 2, dadurch gekennzeichnet, daß der Anlagefläche (3), bei Betrachtung in aktiver Richtung (g$^1$) der Versetzung des führenden Elements, eine zur Achse (X—X) parallele Fläche (47) vorangeht, und daß die führende Fläche (2) eine Stufe (2$^a$—2$^b$) aufweist, die mit dieser Achse einen nennenswerten Winkel einschließt.

5. Vorrichtung nach einem der Asprüche 1 bis 4, dadurch gekennzeichnet, daß das führende Element (1) längs eines mit einem Kopfteil (44) versehenen Schafts (43), welcher mit dem geführten Element (4) fest verbunden ist, gleitend angebracht ist und sich während seines Rücklaufs (g$^2$) formschlüssig gegen das Kopfteil legt.

6. Vorrichtung nach einem der Ansprüche 1 bis 5, dadurch gekennzeichnet, daß sie eine zweite Vervielfachereinrichtung umfaßt, welche eine zweite führende Fläche (2$^c$), eine zweite Anlagefläche (50) und eine zweite Angriffsfläche (5$^a$) sowie einen zweiten Satz von Rollkörpern (107—108—109) entsprechend den ersten (7—8—9) aufweist, wobei die zweite Einrichtung so eingerichtet ist, daß sie die Kraft bei einer zur ersten Versetzung (g$^1$) des führenden Elements entgegengesetzten Versetzung (g$^2$) vervielfacht.

7. Vorrichtung nach einem der Ansprüche 1 bis 6, dadurch gekennzeichnet, daß die drei Elemente (7—8—9, 107—108—109) verschiedenen Durchmesser haben, daß die führende Fläche (2) und die Angriffsfläche (5) Aufnehmungen (10—11$^a$—11$^b$, 10$^a$—53) aufweisen, die mit Spiel die Elemente (7—8, 107—108) aufnehmen, die größeren Durchmesser haben als diejenigen Elemente (7—9, 107—109), mit denen die Flächen jeweils zusammenwirken.

8. Hahn mit gleitend geführtem Verschlußteil und Servoantrieb, dadurch gekennzeichnet, daß zwischen dem Servoantrieb (31—32) und dem Betätigungsschaft (28) des Verschlußteils (29) eine Vorrichtung gemäß einem der Ansprüche 1 bis 7 vorgesehen ist.

## Claims

1. An effort multiplying mechanism, of the type comprising a driving means movable along an axis and having a driving surface which makes a relatively small angle with this axis, a fixed bearing surface making a relatively large angle with this axis, a driven means movable along said axis and having an engaging surface perpendicular to this axis, and rolling means capable of coming into contact simultaneously with these three surfaces, characterized in that each rolling means comprises three independent rolling elements (7—8—9, 107—108—109) which are freely rotatable about the same axis (Y—Y), each of these elements being capable of rolling on only one of the three surfaces (2—3—5, 2$^c$—50—5$^a$).

2. A mechanism as claimed in claim 1, characterized in that the driving surface (2) and bearing surface (3) both diverge toward the engaging surface (5).

3. A mechanism as claimed in claim 1, characterized in that the driving surface (2) and bearing surface (3) respectively diverge and converge toward the engaging surface (5,5$^a$).

4. A mechanism as claimed in claim 2, characterized in that the bearing surface (3) is preceded, when considering the active direction (g$^1$) of displacement of the driving means, by a surface (47) parallel to the axis (X—X), the driving surface (2) having a step (2$^a$—2$^b$) which makes a large angle with respect to this axis.

5. A mechanism as claimed in any one of the claims 1 to 4, characterized in that the driving means (1) is mounted to slide along a rod (43) which has a head (44) and is rigid with the driven means (4), the driving means being rigid with this head during its return travel (g$^2$).

6. A mechanism as claimed in any one of the claims 1 to 5, characterized in that it has a second multiplying unit comprising a second driving surface (2$^c$), a second bearing surface (50) and a second engaging surface (5$^a$) and a second set of rolling means (107—108—109) similar to the first means (7—8—9), this second unit being arranged in such manner as to multiply the effort in the direction of displacement (g$^2$) of the driving means opposed to the first (g$^1$).

7. A mechanism as claimed in any one of the claims 1 to 6, characterized in that the three means (7—8—9, 107—108—109) have different diameters the driving surface (2) and engaging surface (5) having recesses (10—11ᵃ—11ᵇ, 10ᵃ—53) which receive with clearance the means (7—8, 107—108) of larger diameter than that (7—9, 107—109) with which they co-operate respectively.

8. Tap having a sliding closure member and an actuating servo-motor, characterized in that a mechanism according to any one of the claims 1 to 7 is interposed between this servo-motor (31—32) and the actuating rod of the closure member (29).

0 000 850

FIG.1

-1-

FIG.2

FIG.2A

FIG.5

FIG.3

FIG.4

FIG.6    0 000 850

FIG.6A

FIG.7

0 000 850

# FIG. 8

# FIG. 9

# FIG. 10

# FIG. 8 A

# FIG. 10 A

## FIG.11

## FIG.11A

## FIG.11B

FIG.12

FIG.13

FIG.14